# EUROPEAN PATENT SPECIFICATION

(11) **EP 4 231 575 B1**
(45) Date of publication and mention of the grant of the patent: **02.12.2026**
(21) Application number: 21880603.2
(22) Date of filing: 15.10.2021
(51) Int. Cl.: H04L 1/18, H04L 5/00, H04L 25/02, H04L 27/26, H04L 1/00, H04W 72/04, H04W 72/12

(54) **METHOD AND APPARATUS FOR TRANSMITTING AND RECEIVING SIGNALS IN WIRELESS COMMUNICATION SYSTEM**
VERFAHREN UND VORRICHTUNG ZUM SENDEN UND EMPFANGEN VON SIGNALEN IN EINEM DRAHTLOSKOMMUNIKATIONSSYSTEM
PROCÉDÉ ET APPAREIL D'ÉMISSION ET DE RÉCEPTION DE SIGNAUX DANS UN SYSTÈME DE COMMUNICATION SANS FIL

(30) Priority: 15.10.2020 KR 20200133679; 14.01.2021 KR 20210005614; 05.04.2021 KR 20210044128
(43) Date of publication of application: 23.08.2023
(73) Proprietor: LG ELECTRONICS INC., Yeongdeungpo-Gu Seoul 07336 (KR)
(72) Inventor: CHOI, Seunghwan, Seoul 06772 (KR); YANG, Suckchel, Seoul 06772 (KR); KANG, Jiwon, Seoul 06772 (KR); KIM, Seonwook, Seoul 06772 (KR); KIM, Jaehyung, Seoul 06772 (KR)
(74) Representative: Plasseraud IP
(86) International application number: PCT/KR2021/014375
(87) International publication number: WO 2022/080957

(56) References cited:
- EP-A1- 3 579 472
- EP-A1- 3 716 520
- WO-A1-2020/033505
- WO-A1-2020/033623
- WO-A1-2020/067750
- WO-A1-2020/146853
- US-A1- 2004 042 492
- US-A1- 2019 372 721
- ERICSSON: "On NR operations in 52.6 to 71 GHz", 3GPP DRAFT; R1-2005920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 8 August 2020 (2020-08-08), Mobile Competence Centre ; 650, route des Lucioles ; F-06921 Sophia-Antipolis Cedex ; France , XP051917813
- MODERATOR (INTEL CORPORATION): "Discussion summary #6 of [102-e-NR-52-71-Waveform-Changes]", 3GPP DRAFT; R1-2007397, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 29 August 2020 (2020-08-29), Mobile Competence Centre ; 650, route des Lucioles ; F-06921 Sophia-Antipolis Cedex ; France , XP051922985
- XIAOMI: "Required changes to physical layer for NR 52.6-71 GHz", 3GPP DRAFT; R1-2005734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 7 August 2020 (2020-08-07), Mobile Competence Centre ; 650, route des Lucioles ; F-06921 Sophia-Antipolis Cedex ; France , XP051915001

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like. WO2020/033623 A1 relates to acknowledgement procedures in new radio.

### DISCLOSURE

### TECHNICAL TASK

One technical aspect of the present disclosure is to provide a method and apparatus for transmitting and receiving signals to efficiently perform transmission and reception of a data signal and a reference signal in a wireless communication system.

Technical tasks of the present disclosure are not limited to the above-described technical task, and other technical tasks may be inferred from the embodiments of the present disclosure, in accordance with the appended claims. .

### TECHNICAL SOLUTIONS

The present disclosure provides a method of transmitting and receiving signals in a wireless communication system and apparatus therefor.

In one technical aspect of the present disclosure, provided is a method according to claim 1.

In other technical aspects of the present disclosure, provided are an apparatus, processor and storage medium for performing the above-described signal transmitting and receiving method.

### ADVANTAGEOUS EFFECTS

According to one embodiment of the present disclosure, when data and reference signals are transmitted and received between communication devices, uplink channel transmission may be performed more efficiently through an operation differentiated from the related art.

Technical effects of the present disclosure are not limited to the above-described technical effect, and other technical effects may be inferred from the embodiments of the present disclosure.

### DESCRIPTION OF DRAWINGS

FIG. 1 illustrates a radio frame structure.
FIG. 2 illustrates a resource grid during the duration of a slot.
FIG. 3 illustrates a self-contained slot structure.
FIG. 4 illustrates a signal transmitting and receiving method according to an embodiment of the present disclosure.
FIGS. 5 to 8 show an example of apparatuses according to an embodiment of the present disclosure.

### BEST MODE FOR DISCLOSURE

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

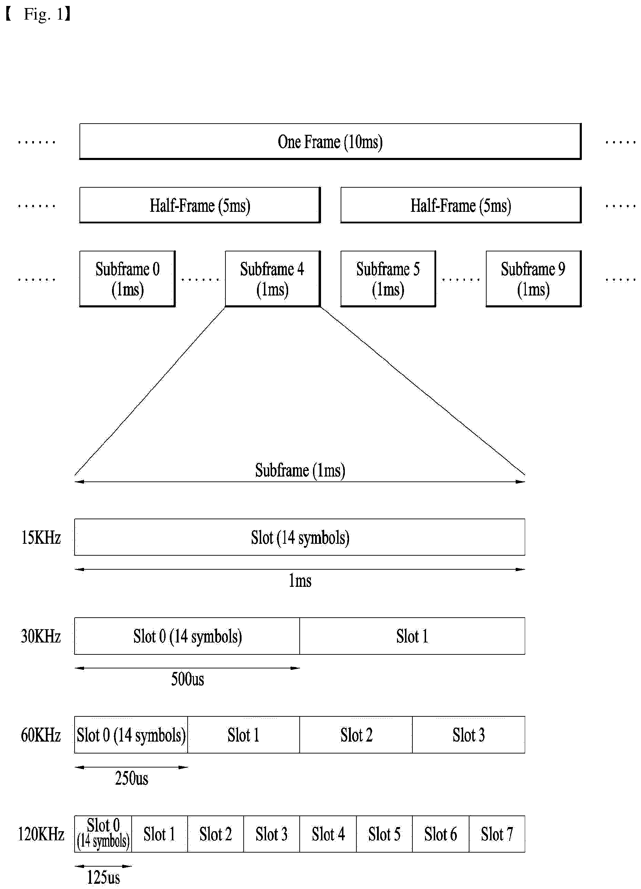

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30kHz or 60kHz, a dense urban area, a lower latency, and a wide carrier bandwidth may be supported. With an SCS of 60kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

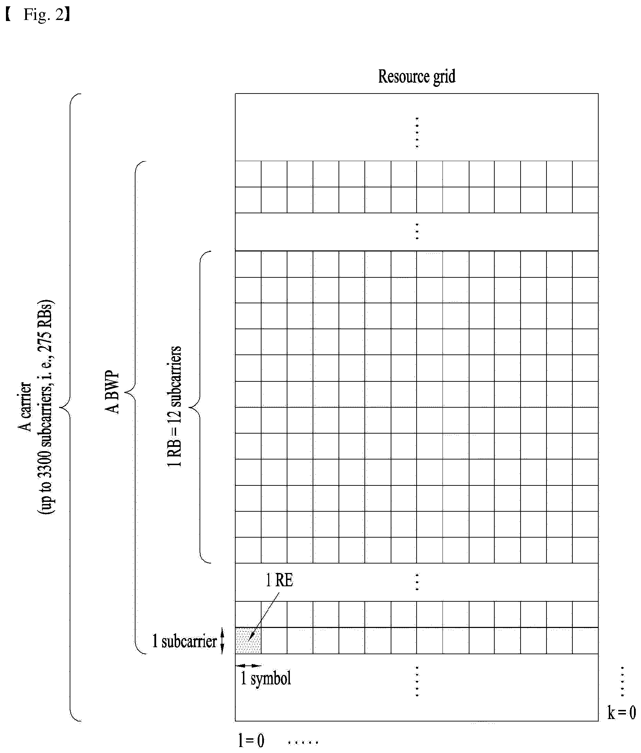

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

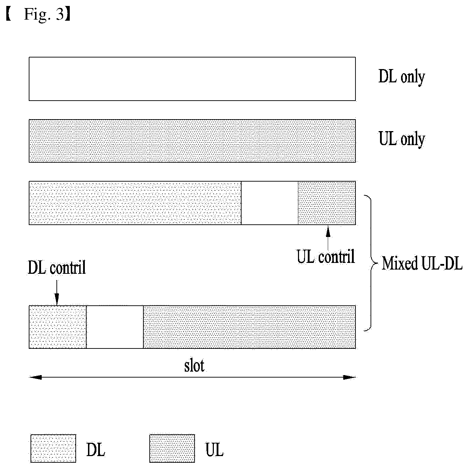

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

**[Table 4]**

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

**[Table 5]**

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.
- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

**[Table 6]**

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: this parameter/information indicates the ID of the SS set.
- controlResourceSetId: this parameter/information indicates the CORESET associated with the SS set.
- monitoringSlotPeriodicity AndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={ 1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

**[Table 7]**

| PUCCH format | Length in OFDM symbols ${N}_{symb}^{PUCCH}$ | Number of bits | Usage | Etc |
|---|---|---|---|---|
| 0 | 1-2 | ≤2 | HARQ, SR | Sequence selection |
| 1 | 4-14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

(0) PUCCH Format 0 (PF0)
   - Supportable UCI payload size: up to K bits (e.g., K = 2)
   - Number of OFDM symbols included in one PUCCH: 1 to X symbols (e.g., X = 2)
   - Transmission structure: only a UCI signal is configured with no DM-RS, and a UCI state is transmitted by selecting and transmitting one of a plurality of sequences.
(1) PUCCH Format 1 (PF1)
   - Supportable UCI payload size: up to K bits (e.g., K = 2)
   - Number of OFDM symbols included in one PUCCH: Y to Z symbols (e.g., Y = 4 and Z = 14)
   - Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).
(2) PUCCH Format 2 (PF2)
   - Supportable UCI payload size: more than K bits (e.g., K = 2)
   - Number of OFDM symbols included in one PUCCH: 1 to X symbols(e.g., X = 2)
   - Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.
(3) PUCCH Format 3 (PF3)
   - Supportable UCI payload size: more than K bits (e.g., K = 2)
   - Number of OFDM symbols included in one PUCCH: Y to Z symbols (e.g., Y = 4 and Z = 14)
   - Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.
(4) PUCCH Format 4 (PF4 or F4)
   - Supportable UCI payload size: more than K bits (e.g., K = 2)
   - Number of OFDM symbols included in one PUCCH: Y to Z symbols (e.g., Y = 4 and Z = 14)
   - Transmission structure: UCI and a DMRS are configured/mapped in/to different symbols based on TDM. The DFT is applied to encoded UCI bits with no multiplexing between UEs.

### 1. Reference signal in high frequency band

The contents examined above may be applied in combination with the methods proposed in the present disclosure to be described later, or can be supplemented to clarify the technical features of the methods proposed in the present disclosure.

In addition, the methods described later may be applied equally to the aforementioned NR system (licensed band) or shared spectrum, and can be modified or replaced to fit the terms, expressions, structures, etc. defined in each system so that the technical ideas proposed in the present specification can be implemented in the corresponding system as well.

The NR system supports a number of numerology (or SubCarrier Spacing (SCS) to support various 5G services. For example, if the SCS is 15 kHz, it supports a wide area in traditional cellular bands. If the SCS is 30 kHz/60 kHz, it supports dense-urban, lower latency, and wider carrier bandwidth. If the SCS is 60 kHz or higher, it supports 24.25 kHz or higher. The NR frequency band up to Release 16 is defined as the frequency ranges of two types (FR1, FR2) and may be configured as shown in Table 3. Furthermore, discussions are underway to support future NR systems above the frequency band (e.g., 52.6 GHz to 71 GHz) defined in FR1/FR2.

A higher frequency band than the FR1 and FR2 bands (e.g., 52.6 GHz to 114.25 GHz, particularly 52.6 GHz to 71 GHz) may be referred to as FR3. In the existing NR system, waveforms, SCS, CP length, timing, and the like defined for FR1 and FR2 may not be applied to FR3.

NR uses DeModulation Reference Signal (DM-RS) for control channels and data channels to perform coherent demodulation. DM-RS is inserted into the allocated resources of the control/data channel and used for channel estimation for coherent demodulation, and fixed patterns are defined according to the control/data channel or the waveform used.

Meanwhile, NR uses a Phase Tracking Reference Signal (PT-RS) to estimate/compensate phase noise generated in a frequency band above FR2. The PT-RS also has fixed patterns defined according to the control/data channel and waveform.

On the other hand, in an NR system operating in a frequency band above FR2 (e.g., 52.6 GHz to 71 GHz), the effect of phase noise may be relatively large. Especially, since InterCarrier Interference (ICI) in the effect of the phase noise increases considerably, when PT-RS supported by the existing communication system is used, the performance degradation may occur in estimating and compensating the phase noise at a receiving end. More specifically, phase noise is not correctly estimated due to interference between adjacent subcarriers, resulting in a situation in which it is difficult to compensate for this. This phenomenon is one of the unique characteristics occurring in the high frequency (e.g., 60 GHz) band. In an NR operation in a high frequency band above 52.6 GHz, various methods have been discussed to solve this problem, and as one method, a block-type PT-RS structure in the frequency direction has been discussed. This structure, called the clustered PT-RS structure or chunk-based PT-RS structure, is a way to effectively estimate and compensate for interference between adjacent subcarriers by sending a PT-RS through consecutive subcarriers (hereinafter collectively referred to as block-PTRS). This method is differentiated from the fact that a PT-RS supported by the existing system is inserted into 1 RE of 1 RB only. However, in order for such a block-PTRS to be applied, many parts that may need to be modified together with a method of configuring DM-RS port association closely related to a PT-RS or a random sequence to be used for the PT-RS.

The present disclosure describes several proposals related to methods to support stable phase noise estimation/compensation in an NR operation in high frequency (e.g., above 52.6 GHz)/wideband. Specifically, a reinforcing method related to DM-RS and PT-RS inserted in downlink data channel (PDSCH) and uplink data channel (PUSCH) that use Cyclic Prefix-Orthogonal Frequency Division Multiplexing (CP-OFDM) as a waveform is proposed, and a configuration method related thereto is described as well. In addition, a proposal for an improvement scheme capable of reducing the influence due to phase noise in the high frequency band is included.

### 1) Configuration method for associating a block-PTRS with a legacy DM-RS

A PT-RS signal supported by the conventional communication system is associated with one port among the allocated DM-RS ports, and a PT-RS is located at an RE location prescribed by the standard according to the associated DM-RS port. For example, a PT-RS is mapped to one subcarrier per RB at regular intervals. The reason why the exact RE location in A Resource Block (RB) where a PT-RS is located is set differently depending on a DM-RS port is to distribute the amount of interference between the ports. A Resource Element (RE) location that varies according to an associated DM-RS port index is referred to as an RE offset. In addition, the PT-RS inserted into the RE location of the associated DM-RS port uses the same reference DM-RS signal. Accordingly, as ae channel estimated using the DM-RS becomes a reference, a phase rotation value may be estimated through the PT-RS.

Meanwhile, a block PTRS (Block-PTRS) uses a plurality of consecutive PT-RSs. In order to use the block PTRS simultaneously with the existing DM-RS, a method of linking DM-RS and PT-RS ports should be determined. In addition, a sequence of PT-RSs located in a plurality of REs should also be defined.

### Method 1-1) Method of determining an RE offset and sequence of a Block PTRS

In the present specification, an RE, which becomes the reference for association with a DM-RS among a plurality of REs used for a block PTRS, is referred to as a reference RE (ref-RE) and a specific method is described. The reference RE is a standard RE for determining an RE offset of the block PTRS. The reference RE may be a standard for determining a sequence located at a plurality of REs used for the block PTRS.

1-1-1) Among REs of a DM-RS port associated with a block PTRS, a method of configuring an RE of the lowest or highest index as a reference RE of the block PTRS may be considered.

In this case, a PT-RS sequence may be determined as follows.
- Ref-RE: A (front-loaded) DM-RS signal at a corresponding location is equally used as a PT-RS signal.
- others: If there is a DM-RS of a port associated with a corresponding RE, the signal is used as a PT-RS, and otherwise, a sequence having a sequence number increased (or decreased) by 1 is used as a PT-RS.

As an embodiment of this, considering a case that DM-RS type 1 (type1) and block PTRS are used simultaneously and that DM-RS port 0 (port0) is associated with block PTRS (in this case, block size is assumed as 7 REs), DM-RS corresponding to DM-RS port 0 is located at REs #0, #2, #4 ... #10, and RE#0 (in case of 'lowest') is determined as a reference RE of the block PTRS. PTRS of RE#0 becomes the same signal (expressed as random sequence R(0)) as DM-RS of RE#0. In this manner, PTRS of RE#1 may be determined as R(0), PTRS of RE#2 and RE#3 may be determined as R(1), PTRS of RE#4 and RE#5 may be determined as R(2), and PTRS of RE#6 may be determined as R(3). In 1-1-1, a case that a block PTRS is located beyond an RB boundary is not considered (in the present disclosure). When a block PTRS is located beyond the RB boundary, 1-1-1 may not be applied. When a block PTRS is located beyond the RB boundary, a PT-RS of an RE corresponding to another RB may be used.

1-1-2) A second method is a method of determining an N^{th} RE as a reference RE among REs of a DM-RS port associated with a block PTRS. The PTRS signal used in this case is determined as a DM-RS at the same location in the reference RE. The PTRS is determined as a DM-RS 1 having a reduced sequence number at an RE having an index smaller than that of the reference RE. The PTRS is determined as a DM-RS of an increased sequence number at an RE having an index greater than that of the reference RE. In an RE corresponding to an associated DMRS port (in the same manner as the first method), a sequence number is not increased and/or decreased, and a DMRS at the corresponding location is used as a PTRS. The N value may be configured by higher layer signaling such as RRC, etc. Alternatively, the N value may be determined through a table predefined according to a block PTRS size. For example, the N may be determined as a central value of RE indexes corresponding to the DMRS port associated with to the block PTRS. Alternatively, when it is determined that N = 0 or N = 11, the method of 1-1-1 may be used.

1-1-3) A third method is to determine a PTRS by determining an M^{th} RE as a standard RE for determining an RE offset among REs excluding a DM-RS port associated with a block PTRS and determining an RE closest to the M^{th} RE as a reference RE among the REs of the associated DM-RS port. The method of determining the PTRS from the reference RE is the same as 1-1-1 and 1-1-2, and the M value may be pre-defined similarly to the N or signaled semi-statically..

1-1-4) According to a fourth method, when a block PTRS is used, according to a configured block PTRS location, in an RE corresponding to a DMRS port associated with the block PTRS among the existing DM-RSs, a DM-RS of the corresponding port is used as a signal of the block PTRS. And, in an RE that does not correspond to the associated DMRS port, an adjacent PTRS is used. In addition, a prescribed location (RE) of a PT-RS supported by the existing communication system becomes a standard location (RE) of a block PTRS, from which an RE offset and a PTRS may be determined. When the adjacent PTRS is used in 1-1-4, an RE of an adjacent upper or lower index may be referred to.

Method 1-1 may be applied to both DL and UL that use CP-OFDM. In addition, Method 1-1 may be applied irrespective of a symbol unit density L and a frequency domain density K of PTRS. In addition, the method 1-1 may be applied to DM-RS type 1 and DM-RS type 2. Method 1-1 may be applied irrespective of single DMRS and double DMRS (i.e., 2-symbol DMRS).

In applying the four methods of Method 1-1, it may occur that a block PTRS configured location (or/and with respect to a method of using a plurality of REs per RB are used as a PT-RS rather than a PT-RS pattern supported by the existing communication system such as a block PTRS and the like) overlaps with a location of an existing DM-RS or a location of such a reference signal as CSI-RS, TRS, SRS, etc. Alternatively, it may occur that a block PTRS configured location may overlap with a signal such as SSB, etc. Compared to the existing PT-RS inserted at one determined location per RB, such collisions may occur more frequently, and if such collisions occur, the following two methods may be applied.
1-a) A method of puncturing an entire block PTRS and not transmitting a PTRS if some or all of a block PTRS overlaps with a signal such as an existing RS including a DM-RS or a CSI-RS, an SSB and the like
1-b) A method of puncturing only a collision occurring symbol and/or subcarrier location in a block PTRS and transmitting the rest of the configured block PTRS if some or all of the block PTRS overlaps with a signal such as an existing RS including a DM-RS or a CSI-RS, an SSB and the like

The methods of 1-a and 1-b may be predefined or semi-statically configured by signaling such as RRC.

### 2) A method of changing a DM-RS pattern for block PTRS association

As described above, when a block PTRS is used simultaneously with a DM-RS supported by an existing communication system, with respect to a consecutive RE used for the block PTRS, the DM-RS (corresponding to one DM-RS port associated therewith) does not always exist at the corresponding RE location. In the case of DM-RS type 1, a DM-RS of one DM-RS port is in a comb form where the DMRS exists only in the even or odd index RE location within one RB. For this reason, phase rotation is estimated with respect to some RE (e.g., even indexed RE) among consecutive REs of a block PTRS based on a channel value estimated by with a DM-RS, but a value interpolated for channel estimation values of an adjacent RS (even indexed) should be used as a standard value of the phase rotation with respect to some REs (odd indexed). Accordingly, estimation and compensation performance of phase noise using block PTRS may be deteriorated. In the present proposal, a method for solving the above-described problem through a change in an existing DM-RS pattern is described. Furthermore, the proposed method may be effectively applied when high frequency bands (e.g., 60 GHz or more) and large SCS (e.g., 240 kHz or more) requiring block PTRS introduction are configured in PDSCH and/or PUSCH. In addition, the proposed method may be effectively applied when OFDM symbol and slot lengths are shortened due to large SCS, thereby being effectively applicable in case of ensuring a certain level or higher of correlation between adjacent OFDM symbols. However, the application of the proposed method is not limited to the channel/network/transmission environment described above.

### Method 2-1) Method of staggering a 2^{nd} DM-RS symbol of a double symbol DM-RS

Method 2-1 is a method applicable to DM-RS type 1 with a front-loaded double symbol. A specific staggering method is as follows. For an RB having a PT-RS included therein, an existing pattern is maintained as it is with respect to a first one of two DM-RS symbols, and a Cyclic Shift (CS) by 1 RE is applied within an RB in a frequency direction (i.e., an RE index decreasing direction) with respect to a second symbol. For this reason, a DM-RS corresponding to a DM-RS port associated with a block PTRS may be used at all of a plurality of RE locations of the block PTRS. In this case, the direction and/or amount of the shift is not limited to a specific value (e.g., a base station/UE may follow the predefined rule), but it is described as above for convenience of description. Regarding the proposed second symbol DM-RS staggering, an RE offset of the block PTRS associated therewith may be configured based on a reference RE that has been determined by the method described in 1). In addition, in this case, as a PT-RS signal used for each RE of the block PTRS, a DM-RS (of the associated port) present in each RE may be used. This method is applicable with or without additional DM-RS symbol configuration. If an additional DM-RS is configured, a presence/non-presence and form of the corresponding symbol may be predefined or indicated by higher layer signaling such as RRC and the like, or may follow Method 2-2 described later.

### Method 2-2) A staggering method using an additional DM-RS symbol

When an additional DM-RS is configured, a front-loaded DM-RS symbol is not changed, and an additional DM-RS symbol is staggered similarly to Method 2-1. Method 2-2 may be applied to both cases where one or two front-loaded DM-RS symbols are configured. Method 2-2 may be applied to both cases where one and/or two additional symbols are configured as well. Similar to the case of Method 2-1, an RE offset of a block PTRS may be configured based on a reference RE once the reference RE is determined. Regarding a PT-RS for each RE, if three is a DM-RS associated with the corresponding RE, the same signal is used. If there is no DM-RS associated with the corresponding RE, the signal may be determined from a reference RE according to the sequence determining method described in 1).

### Method 2-3) A method of staggering a DM-RS symbol in slot unit (i.e., slot level) when multi-slot scheduling is configured

A method of changing a DM-RS symbol in a slot unit may also be considered. If SCS (e.g., 960 kHz or more) larger than FR1/FR2 in a high-frequency (e.g., 60 GHz or more) band is used (or, large SCS (e.g., 120 kHz or more) of an existing FR2), OFDM symbol and slot lengths (durations) will become very short. Accordingly, scheduling and PDSCH/PUSCH transmission may be performed in unit of a plurality of slots. In case of the multi-slot scheduling and transmission, a DM-RS staggering method may be applied in a slot unit. For example, when PDSCH is scheduled for two-slot consecutive transmission, the existing pattern is not changed for a DM-RS symbol in a first slot and the DM-RS staggering (i.e., a frequency direction cyclic shift in RB units) described in Method 2-1 or Method 2-2 is applied to a DM-RS symbol transmitted in a second slot, whereby RE locations of the DM-RS symbols transmitted in the two slots may be distributed. Method 2-3 may be applicable irrespective of a presence or non-presence of multi-slot scheduling and/or the number of slots transmitted. Method 2-3 may be configured irrespective of a DM-RS type, the number of front-loaded DM-RS symbols, and a presence or non-presence of an additional DM-RS symbol. In addition, whether or not to use slot-unit (or slot-level) DM-RS staggering may be semi-statically configured through higher layer signaling such as RRC, etc. Alternatively, whether to use the slot-unit DM-RS staggering may be predefined. Alternatively, whether to use the slot-unit DM-RS staggering may be dynamically indicated through DCI. In addition, an RE offset of a block PTRS and a PT-RS of each RE may be determined based on the reference RE method described in 1).

The above-described methods 2-1 to 2-3 may be independently configured/applied according to parameters such as DM-RS type, SCS and the like configured for the allocated PDSCH and/or PUSCH, or may be configured /applied in association with each other. In addition, in the methods 2-1 to 2-3, DM-RS staggering may be applied only to an RB containing a PT-RS (in this case, an RB not containing a PT-RS uses an existing DM-RS pattern), or to all RBs of the allocated PDSCH and/or PUSCH. In addition, whether the DM-RS staggering is applied to the PT-RS contained RB only or all the RBs of the allocated PDSCH and/or PUSCH may be predefined or semi-statically configured by RRC, etc.

Additionally, all three kids of the DM-RS staggering methods of Methods 2-1 to 2-3 may be applied irrespective of a symbol level density L of PT-RS. Methods 2-1 to 2-3 are described assuming the case of L=1 for convenience of description. In case of L > 1, when counting OFDM symbols up to the L value, a symbol into which a PT-RS is inserted may vary in a slot depending on whether the symbol counting begins with a staggered DM-RS symbol or a non-staggered DM-RS symbol. For example, in the case of L = 2, a block PTRS is located for each 2 OFDM symbols, and a DM-RS associated with the block PTRS differs in RE location between a first symbol and a second symbol according to the double symbol DM-RS staggering in Method 2-1. Accordingly, in order to maintain L = 2, a symbol location of the block PTRS inserted into the corresponding slot may also be changed in a shape similar to that of the DM-RS. A start location of the symbol counting according to the L value may be defined in advance. Alternatively, a start location of the symbol counting according to the L value may be configured differently depending on channel estimation between adjacent DM-RS REs and the interpolation performance using the same. For one example, a PT-RS may be configured to be located in a different symbol for each RE of a block PTRS. For another example, in order to enhance ICI estimation performance, only a PT-RS of a reference RE is disposed while maintaining the L value, and for other REs, a PT-RS may be located in the same symbol as the reference RE.

In addition, if a bandwidth scheduled for NR operating in a high frequency band (e.g., 52.6 GHz) is considerably large and a PT-RS frequency density is low, and when the methods of 2) are applied only to a PT-RS contained RB (or RB group/set), impact on a data signal transmitted on PDSCH and/or PUSCH may be minimized. Accordingly, the methods of 2) may be selectively applied according to frequency band, numerology, BW, DMRS/PTRS configuration, etc. To this end, the methods of 2) may be predefined or semi-statically configured through higher layer signaling such as RRC, etc. Alternatively, the methods of 2) may be dynamically configured through DCI or the like. Alternatively, the methods of 2) may be configured implicitly/explicitly.

In applying the three kinds of methods of Methods 2-1 to 2-3 (or for a method of using a plurality of REs per RB as a PT-RS rather than a PT-RS pattern supported by an existing communication system such as a block PTRS and the like), it may occur that a block PTRS configured location overlaps with a location of an existing DM-RS or locations of other reference signals such as CSI-RS, TRS, SRS, and the like. Alternatively, it may occur that a block PTRS configured location overlaps with a signal such as SSB, etc. Compared to an existing PT-RS inserted at one determined location per RB, such collisions may occur more frequently. If such a collision occurs, the following two kinds of methods are applicable.
2-a) If some or all of a block PTRS overlaps with a signal such as an existing RS including a DM-RS or a CSI-RS,, an SSB or the like, a method of puncturing the corresponding block PTRS entirely and not transmitting a PTRS
2-b) If some or all of a block PTRS overlaps with a signal such as an existing RS including a DM-RS or a CSI-RS,, an SSB or the like, a method of puncturing only a collision occurring symbol and/or subcarrier location in the block PTRS and transmitting the rest of the configured block PTRS.

The methods of 2-a and 2-b may be predefined or semi-statically configured by signaling such as RRC, etc.

### 3) Method of configuring an N1 processing margin

Meanwhile, separate signal processing may be required to estimate and restore severe ICI at a receiving end in PDSCH/PUSCH transmission of NR operating on high frequency broadband. In addition to the case where the above-described block PTRS is used, a signal processing time required for ICI removal at the receiving end may be added according to a combination of a specific SCS and a Modulation and Coding Scheme (MCS) (e.g., when 120 kHz SCS and 16-QAM MCS are used). Accordingly, N1 defined in the existing NR system, i.e., a time from downlink PDSCH reception to HARQ-ACK generation/transmission may be further necessary. To this end, proposed is a method of configuring a margin to be added to the N1 processing time.

### 3-1) N1 processing time margin configuration according to PT-RS pattern

N1 processing time may be configured as N1+a according to a configured PT-RS pattern. For example, it may be set to a=0 when the existing PT-RS pattern supported by the conventional Rel-15/16 is configured. It may be set to a > 0 when other changed PT-RS pattern is configured. The a value may be predefined later or may be set through signaling such as RRC, etc. The changed PT-RS pattern may include a block PTRS proposed in 1) and 2) and/or a PT-RS for Msg3 PUSCH proposed in 4) and/or a PT-RS for RB allocation proposed in 5) and 6), in the present specification.

### 3-2) N1 processing time margin configuration according to MCS configuration

N1 processing margin may be configured as N1+a according to a configured MCS. In NR system, according to the description using Qm (e.g., Qm=2 means QPSK and 4 means 16QAM), an N1 processing margin value becomes a=0 for Qm≤b, and the configuration may be applied to become a>0 for Qm>b. In this case, b may be defined in advance or indicated by higher layer signaling such as RRC, etc.

The methods of 3-1 and 3-2 may be used alone to configure the N1 processing time margin, or may be used to determine the N1 processing time margin in association. In addition, it may be used to determine the N1 processing time margin alone or in association only when a specific SCS value is set (e.g., 120 kHz).

### 3-3) N1 processing time margin configuration according to frequency band and SCS configuration

Conditions and/or configuring methods, to which an additional processing time margin is configured and/or applied for each SCS (or numerology), may be predefined or dynamically configured. For example, an MCS configured for each SCS may become a condition for configuring and/or applying an additional processing time margin. That is, if a specific MCS is used for each SCS, an additional processing time margin may be configured in addition to N1 under the assumption that it may take a lot of time to process PDSCH and/or PUSCH at a receiving end. A gNB and User Equipment (UE) operate on the assumption of a processing time of N1+a according to the configured SCS and MCS. For a predefined SCS and MCS combination e.g., 120kHz, 64QAM), the value of a processing time margin a becomes a > 0. For other SCS and MCS combinations, the value may become a = 0. This method may operate under the assumption of a processing time of N1+a (a>0) irrespective of PTRS and DMRS patterns, and thus it may be configured and/or applied as a>0 even when using DMRS and PTRS patterns supported by NR rel-15/16. In other words, even when the PT-RS pattern defined in NR rel-15/16 is used the same (RS at transmission/reception), the time required for decoding a data channel (e.g., PDSCH) at a receiving end may be secured by defining an additional processing time margin at the receiving end.

### 3-4) N1 processing time margin configuration according to a configured BW and/or an allocated RB

N1 processing time may be configured as N1+a according to a configured BW and/or the number of RBs. Namely, a specific bandwidth size and/or a specific RB number predefined or indicated is provided as a threshold value. If a bandwidth and/or an RB number allocated (configured) semi-statically or dynamically by a network is smaller than a threshold value, the processing time is configured as N1+a (a>0). If the allocated bandwidth and/or the configured RB number is greater than the threshold value, the processing time may be configured as N1+a (a=0). Alternatively, the processing time may be configured as N1+a (a>0) when the allocated (configured) BW (or RB number) is greater than the threshold value. The processing time may be configured as o N1+a (a=0) when the configured BW (or RB number) is smaller than the threshold value. In this case, if the number of the allocated RBs is small so that the number of PTRS samples is not sufficient, matrix inversion for ICI compensation may not be performed properly in a UE (e.g., a receiving end). In addition, it may consider a case that CPE compensation may be sufficient even if PTRS is configured. (i.e., performing ICI compensation in this case may degrade performance). For this reason, the value of the processing time margin a according to the number of RBs may be configured in various ways.

In addition, this processing time margin configuring method is configured independently from an operation of NR re-15/16 that defines whether to use a PT-RS according to BW (or number of RBs), so that a size of a processing time margin may be determined. In addition, the BW and RB number may be used as a condition for determining the value of 'a' in association with MCS and/or SCS. As an embodiment of this, when the number of RBs allocated for a specific UE operation is very small as shown in Tables 8 and 9, a PT-RS may not be used according to the PT-RS use condition defined in NR rel-15/16. Table 8 shows time density of PT-RS as a function of scheduled MCS, and Table 9 shows frequency density of PT-RS as a function of scheduled bandwidth.

**[Table 8]**

| Scheduled MCS | Time density(L_{PT-RS}) |
|---|---|
| I_{MCS}<ptrs-MCS₁ | PT-RS is not present |
| ptrs-MCS₁≤ I_{MCS}<ptrs-MCS₂ | 4 |
| ptrs-MCS₂≤ I_{MCS}< ptrs-MCS₃ | 2 |
| ptrs-MCS₃≤ I_{MCS}<ptrs-MCS₄ | 1 |

**[Table 9]**

| Scheduled bandwidth | Frequency density (K_{PT-RS}) |
|---|---|
| N_{RB}<N_{RB0} | PT-RS is not present |
| N_{RB0}≤ N_{RB}<N_{RB1} | 2 |
| N_{RB1}≤ N_{RB} | 4 |

Even in this case, using the above-described method, a UE may operate by configuring an additional processing time margin according to a predefined condition for a processing time margin configuration.

### 3-5) N1 processing time margin configuration according to DMRS pattern

N1 processing time may be configured as N1+a according to a configured DM-RS pattern. For example, if an existing DM-RS pattern supported by Rel-15/16 is configured, it may be configured as a=0. If other changed DM-RS patterns are configured, it may be configured as a>0. The value of 'a' may be defined in advance later or configured through signaling such as RRC, etc.

### 3-6) N1 processing time margin configuration according to UE's indication

By 3-1 to 3-5, a base station and a UE (or a gNB and a UE) may additionally configure an N1 processing time margin according to a frequency band, SCS, MCS, DMRS pattern, and PTRS pattern. The base station and the UE may operate by being predefined and/or configured so that a processing time of N1+a becomes a>0 under a specific condition or a=0 under other conditions. In addition, when an additional PDSCH processing time margin is required through an indication of the UE, it may be configured as a>0 even if it does not meet the predefined conditions. As an embodiment of this, the following situation may be considered. Performance requirements may be defined for each MCS or modulation in specification (especially RAN4, etc.). In order to meet these performance requirements for a UE operating in NR in the 60-GHz band, a use of a separate signal processing technique for ICI compensation may be required by a receiving UE (i.e., the role of receiving PDSCH, DMRS, and PTRS). In this case, the UE may inform the base station in any form that a separate signal processing technique is required, and accordingly, a PDSCH processing time may be configured by adding an additional processing time margin of a>0.

In order to ensure a PDSCH time of the UE when N1+d (d>=0) is configured by the base station and/or UE, the base station configures a UL transmission slot location to send HARQ-ACJ after T_{PROC,1}=(N₁+d_{1,1}+d₂)(2048+144)· κ 2- ^{µ}·T_{c}+Tₑₓₜ , which amounts to a time more than N1+d, (e.g., using a PDSCH-to-HARQ_feedback timing indicator field of DCI). If a time interval between the configured slot location and PDSCH fails to meet the time amounting to N1+d, the UE is not obligated to transmit a valid HARQ-ACK. In N1+d, the d denotes d1 and1+d2 of the equation 'Tproc,1'. Parameters in the equation for deriving T_{PROC,1} are defined in 6.4 UE PUSCH preparation procedure time of 3GPP TS 38.214 document. Through such an operation, a processing time for the UE to stably receive and decode PDSCH and to create an HARQ-ACK may be guaranteed.

On the other hand, if a (a>0) is additionally configured by the methods and/or conditions of 3-1 to 3-6, (i.e., N1+d+a, N1+d is meant and N1+d is expressed as N1 for convenience of description later), especially if PTRS processing and/or ICI compensation takes a lot of time, an additional processing time due to a (> 0) may be regarded as a time required for reception performance improvement instead of a minimum time required for reception and decoding. In this case, even if an interval between PDSCH and UL transmission slot location is configured less than or equal to a processing time due to N1+a (a>0), the UE may perform a valid HARQ-ACK transmission if a time equal to or greater than the time due to N1 is guaranteed.

For example, for complete ICI compensation, when a de-ICI filter tap is required to be equal to or greater than a specific k for PDSCH decoding by the UE, the base station may configure an HARQ-ACK transmission slot for the UE in consideration of a sufficient processing time for a filter above k-tap to operate. However, if the sufficient processing time is not secured but only a minimum decoding available time is secured, the UE may operate to transmit a valid HARQ-ACK. In other words, when a processing time margin is configured in N1 through the conditions and/or methods of 3-1 to 3-6, the base station and the UE may expect valid HARQ-ACK transmission and reception through an operation method in Table 10 even if the time amounting to N1+a is not guaranteed for the PDSCH processing of the UE.

**[Table 10]**

| |
|---|
| If a time between PDSCH and UL transmission slot is indicated by a base station (gNB) to be N1 or more and less than N1+a, a UE should transmit a valid HARQ-ACK irrespective of whether performance requirements are met (e.g., if UE's PDSCH reception performance is within a reception requirement condition through ICI compensation). If the time is indicated to be equal to or greater than N1+a, the UE should meet the performance requirements and also transmit a valid HARQ-ACK at the same time. |
| In addition, in case of configuring a UL slot location to guarantee a processing time equal to or greater than N1+a (a>0), the base station may recognize that the valid HARQ-ACK is derived with sufficient reception performance. Otherwise, the base station may receive and HARQ-ACK by recognizing that the HARQ-ACK is a valid HARQ-ACK derived in a state that UE's sufficient reception was not guaranteed. |

The methods of 3-1 to 3-6 may be used alone to configure he N1 processing time margin as described or to determine the processing time margin in association with each other. In addition, a reference value required for the additional processing time margin configuration operation may be determined semi-statically through higher layer configuration such as RRC or the like, or configured by a dynamic method such as DCI, etc.

### 4) PT-RS configuration method for Msg3 PUSCH

Meanwhile, as described above, phase noise effect may be serious in NR operating in a high frequency (e.g., 60 GHz) band. This is the same for transmission at an initial access stage before RRC connection is set up. For this, the Rel-15/16 specification specifies that only QPSK should be used for a DL signal (e.g., Msg2) at this stage, and PT-RS is not configured for DL transmission using QPSK. On the other hand, QPSK and 16QAM (Quadrature Amplitude Modulation) may be configured as MCS for Msg3 PUSCH that is UL transmission, but the conventional communication systems do not support the use of PT-RS for Msg3 PUSCH. For example, if Msg3 PUSCH operates by being configured with a specific SCS (e.g., 120 kHz) and a specific MCS (e.g., 16QAM), performance degradation may occur due to phase noise. To solve this problem, a change related to the Msg3 PUSCH configuration may be necessary. A method for this is described in the present proposal.

### 4-1) A method of limiting to QPSK only for a specific transmission parameter combination

To solve a case where Msg3 PUSCH is affected by severe phase noise, only QPSK may be allowed for Msg3 PUSCH transmission if specific transmission parameters, i.e., a frequency band (e.g., 60 GHz) and SCS (e.g., 120 kHz) are configured. Such limitations may be predefined in a base station and a UE or configured by indication through SIB.

### 4-2) A method of defining a default PT-RS pattern used for Msg3 PUSCH

Currently, PT-RS is not used for Msg3 PUSCH before RRC connection or during an initial access phase, but a default PT-RS pattern may be defined to solve a case where phase noise may affect Msg3 PUSCH reception performance. For example, values of L and K may be predefined as one of the values (e.g., L=1 and K=2) supported by Rel-15/16. Alternatively, a default PT-RS used for Msg3 PUSCH may be configured using another value (e.g., K=1). The default PT-RS pattern may be defined in advance in a UE and a base station, or indicated from the base station to the UE through SIB or the like. In addition, whether or not to use the default PT-RS pattern for Msg3 PUSCH may be semi-statically configured.

### 4-A) A method of configuring a PT-RS for MsgA PUSCH

Meanwhile, for a fast initial access in NR, an RACH operation consisting of the existing 4-step procedure may be simplified into 2 steps. In this case, in the case of the two-step RACH, Msg1 and Msg3 of the existing four-step RACH are transmitted in a first step (MsgA), and Msg2 and Msg4 are transmitted in a second step (MsgB).

In the two-step RACH, QPSK and 16QAM may be configured as MCS in MsgA PUSCH. In addition, the use of PT-RS for MsgA PUSCH is not supported in the conventional communication system. For example, if MsgA PUSCH is configured with a specific SCS (e.g., 120 kHz) and a specific MCS (e.g., 16QAM), performance degradation due to phase noise may occur, and to solve this, changes related to MsgA PUSCH configuration may be required. A method for this is described in the present proposal.

### 4-A-1) A method of limiting to QPSK only for a specific transmission parameter combination

In order to solve a case where Msg3 PUSCH is affected by severe phase noise, only QPSK may be allowed for Msg3 PUSCH transmission if specific transmission parameters (i.e., frequency band (e.g., 60 GHz) and SCS (e.g., 120 kHz)) are configured. Such limitations may be defined in advance in a base station and a UE or configured by indication through SIB.

### 4-A-2) A method of defining a default PT-RS pattern used for MsgA PUSCH

Currently, PT-RS is not used for Msg3 PUSCH before RRC connection or during an initial access phase, but a default PT-RS pattern may be defined to solve a case where phase noise may affect Msg3 PUSCH reception performance. For example, L and K values may be predefined as one of the values (e.g., L=1, and K=2) supported by Rel-15/16. Alternatively, a default PT-RS used for Msg3 PUSCH may be configured using another value (e.g., K=1). The default PT-RS pattern may be defined in advance in a UE and a base station, or indicated from the base station to the UE through SIB or the like. In addition, whether or not to use the default PT-RS pattern for Msg3 PUSCH may be semi-statically configured.

### 5) PTRS for small RB allocation

NR defines whether to use a PTRS according to a configured MCS and number of RBs. As described above, a PTRS density on the time and frequency axes may be defined as shown in Table 8 and Table 9.

Accordingly, when RBs are allocated less than a specific number of RBs, a PTRS may not be inserted into PDSCH and/or PUSCH transmission. Even when MCS is considered together with the number of RBs, whether to use a PTRS is determined in the same manner. Meanwhile, performance degradation due to phase noise may become serious in frequency bands (e.g., a high frequency band such as 60GHz) other than FR1/FR2, and a use of a PTRS may be required for PDSCH and/or PUSCH transmission to which such a small number of RBs are allocated. In addition, since an ICI compensation technique at a receiving (e.g., UE) end using a PTRS may require a large number of PTRSs, time and/or frequency density of a PTRS need to be increased to satisfy the reception performance required in a specific frequency band (e.g., 60 GHz) and/or a specific SCS (e.g., 120 kHz, 960 kHz). Hereinafter, when a small number of RBs are allocated, methods for increasing the number of PTRSs available at a receiving end are proposed. In the following proposal, "the number of RBs of a particular value" may be predefined according to a frequency band and/or an SCS and/or an MCS or indicated by a semi-static method.

5-1) A method of configuring a separate PTRS density table if the number of allocated RBs is smaller than or equal to a specific value: A separate PTRS density table may be configured and used to ensure the performance of a small RB allocation for a case that a specific frequency band and/or a specific SCS are used. In this case, a PTRS density table becoming a base and a PTRS density table for small RB allocation are predefined in a base station and a user equipment, and one of the two tables, which will be actually applied, may be configured by separate signaling.

5-2) A method of configuring an additional PTRS use if the number of allocated RBs is smaller than or equal to a specific value: A PTRS density table is defined as one type like the existing NR system, and an additional PTRS use may be allowed only if the number of allocated RBs is smaller than or equal to a specific value. For example, even if PTRS having a frequency density of K=2 according to a PTRS density table is allocated, more PTRSs than the number of PTRSs according to K=2 may be used in an allocated frequency resource (e.g., an allocated bandwidth (or BWP)) if an additional PTRS use condition is satisfied. As another example, even if a PTRS signal is configured not to be used according to a PTRS density table, the PTRS may be used in an allocated frequency resource if an additional PTRS use condition is satisfied. In this case, the time/frequency location of an added PTRS and the number of PTRSs may be defined in advance, semi-statically configured through signaling such as RRC, etc., and/or dynamically configured through DCI, etc.

Application conditions for PTRS configuration or increase in the small RB allocation described above may be applied in association with a specific SCS (e.g., 120 kHz and/or 480 kHz) configuration.

### 6) A method of table configuration for PTRS K value addition

In NR rel-15/16, when configuring a frequency density of PTRS, K_{PT-RS} (hereinafter referred to as K) may vary depending on the number of allocated RBs, and 'K=2 and/or K=4' are supported (see Table 6.2.3.1-2 above). For the operation of the 60GHz band under discussion in NR rel-17, SCS of 120k, 480k, and 960 kHz will be supported for data and control channels containing PDSCH/PUSCH, and the PTRS frequency density may need to be increased/decreased due to the phase noise characteristics of the corresponding band. For example, K=1 may be used because sufficient PTRS samples are required for ICI compensation in a situation of small RB allocation, and the introduction of K values greater than K=4 may be efficient due to the increased SCS (e.g., 960 kHz) in a situation of large RB allocation. In addition, the required PTRS frequency density may vary depending on the MCS configuration. For example, more PTRS symbols are needed for ICI compensation, as performance degradation due to ICI becomes worse when using 64QAM than QPSK. For the configuration of an added PTRS K value, the present disclosure describes a method of assigning K according to SCS, MCS, and the number of allocated RBs.

K=1, K=6, and K=8 may be newly introduced according to the configured SCS, MCS, and RB number. Specifically, for small RB allocation, K = {0, 1, 2, 4} or a subset thereof may be configured. For large RB allocation, K = {0, 1, 2, 4, 6, 8} or a subset thereof may be configured. K=0 means a configuration that does not use a PTRS. A method of selecting one of the possible Ks according to the number of allocated RBs is performed based on the table shown in Table 12 as described above. (Hereinafter, referred to as a PTRS table.)

The PTRS table may be determined as shown in Table 11 to support the additionally introduced K.

**[Table 11]**

| Scheduled bandwidth | Frequency densitv (K_{PT-RS}) |
|---|---|
| N_{RB} < N_{RB0} | PT-RS is not present |
| N_{RB0} ≤ N_{RB} < N_{RB1} | k1(=1) |
| N_{RB1} ≤ N_{RB} < N_{RB2} | k2(=2) |
| N_{RB2} ≤ N_{RB} < N_{RB3} | k3(=4) |
| N_{RB3} ≤ N_{RB} < N_{RB4} | k4(=6) |
| N_{RB4} ≤ N_{RB} | k5(=8) |

In this case, the N_{RBi} (i = 0, 1, 2, 3, 4) value is semi-statically configured by a base station having received a report of a preferred value from a UE for each SCS. In the PTRS table above, k1 to k5 values may be defined in advance or semi-statically configured through signaling such as RRC, etc. For better understanding, in the PTRS table above, k1=1 ... k5=8 are represented, and values other than the values in Table 13 may be used. In addition, different PTRS tables may be configured depending on the configured SCS and/or MCS (i.e., N_{RBi} and k1~ k5 values are configured independently for each PTRS table). In this case, only some rows in Table 13 above may be used in the PTRS table corresponding to each SCS and/or MCS. For example, for all MCSs of 120 kHz SCS, some rows of Table 11 may be used like Table 12.

**[Table 12]**

| Scheduled bandwidth | Frequency density (K_{PT-RS}) |
|---|---|
| N_{RB} < N_{RB0} | PT-RS is not present |
| N_{RB0} ≤ N_{RB} < N_{RB1} | 1 |
| N_{RB1} ≤ N_{RB} < N_{RB2} | 2 |
| N_{RB2} ≤ N_{RB} | 4 |

Table 13 below may be independently configured for a 16-QAM or more MCS of 960 kHz SCS.

**[Table 13]**

| Scheduled bandwidth | Frequency density (K_{PT-RS}) |
|---|---|
| N_{RB} < N_{RB0} | PT-RS is not present |
| N_{RB0} ≤ N_{RB} < N_{RB1} | 1 |
| N_{RB1} ≤ N_{RB} < N_{RB2} | 2 |
| N_{RB2} ≤ N_{RB} < N_{RB3} | 4 |
| N_{RB3} ≤ N_{RB} | 8 |

6-1) Instead of defining each PTRS table for all configurable SCSs and MCSs, a specific value in the table may be determined by semi-static configuration after one PTRS table is defined. For example, Table 13 may be defined in advance, and N_{RBi} may be configured as a specific value according to a specific SCS and/or MCS. For example, for a specific SCS (e.g., 120 kHz), if N_{RB0} = N_{RB1} = 1 is configured and N_{RB3} is configured as "(maximum number of allocable RBs) + 1", a PTRS table that can indicate only K = {0, 2, 4} may be configured.

6-2) Instead of defining each PTRS table for all configurable SCSs and MCSs, one PTRS table for a specific SCS and/or a specific MCS may be configured, and options for K value configuration for another SCS/MCS may be configured additionally. For example, after a PTRS table like Table 12 is configured for a high MCS range (e.g., 64-QAM or more), N_{RBx} (in this case, N_{RB0} < N_{RBx} < N_{RB1}) is additionally defined for a low MCS range (e.g., 16-QAM or less). When the number of RBs allocated is equal to or greater than N_{RB0} and smaller than N_{RBx}, if K = 1 is configured, Table 14 below may be configured.

**[Table 14]**

| Scheduled bandwidth | Frequency densitv (K_{PT-RS}) |
|---|---|
| N_{RB} < N_{RB0} | PT-RS is not present |
| N_{RB0} ≤ N_{RB} < N_{RBx} | 1 |
| N_{RBx} ≤ N_{RB} < N_{RB1} | 2 |
| N_{RB1} ≤ N_{RB} | 4 |

6-3) Instead of defining each PTRS table for all configurable SCSs and MCSs, a method of configuring one PTRS table for a specific SCS and/or a specific MCS and changing a K value (e.g., double, half, etc.) of the configured PTRS table for other SCSs and/or other MCSs may be used. For example, if Table 12 is configured for 480 kHz/960 kHz SCS, a value resulting from dividing the K value in Table 12 by 2 may be used for 120 kHz SCS and 64-QAM or more MCS.

Meanwhile, the content of the present disclosure is not limited and applied only to transmission and reception of uplink and/or downlink signals. For example, the content of the present disclosure may also be used for UE-to-UE direct communication. In addition, a base station in the present disclosure may be a concept including a relay node as well as a base station. For example, an operation of a base station in the present disclosure may be performed by the base station, but may also be performed by the relay node.

It is apparent that the examples of the proposed method described above can also be included as one of the implementation methods of the present disclosure, and thus can be regarded as a kind of proposed methods. In addition, the proposed methods described above may be implemented independently, but may also be implemented in the form of a combination (or merger) of some proposed methods. The rule may be defined so that a base station (or a transmitting UE) informs a UE (or a receiving UE) of information indicating whether to apply the proposed methods (or information on the rules of the proposed methods) through a predefined signal (e.g., physical layer signal or higher layer signal).

### Implementation Example

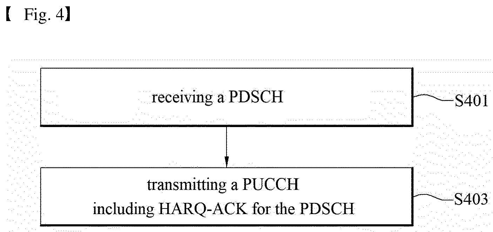

FIG. 4 is a flowchart illustrating a signal transmitting/receiving method according to embodiments of the present disclosure.

Referring to FIG. 4, embodiments of the present invention may be performed by a UE, and may include a step S401 of receiving a PDSCH and a step S403 of transmitting a PUCCH including an HARQ-ACK for the PDSCH.

Based on the operation of FIG. 4, one or more of the operations described in 1) to 6) may be combined and performed. For example, a reference signal for the PDSCH may use a PTRS and/or DMRS in the form described in 1) to 6).

In addition, based on the embodiment of 3), a processing time from an end timing point of PDSCH reception to a start timing point of transmission of PUCCH may be determined. According to 3), a value of the processing time margin 'a' for the processing time may be determined as a > 0 based on satisfying a specific condition. And, a value of the 'a' may be determined as a = 0 based on failing to satisfy the specific condition.

The specific condition may be one or more of the conditions described in 3-1) to 3-6). For example, if a combination of one or more of the conditions of 3-1) to 3-6) is satisfied, the value of 'a' may be determined as a > 0. If a combination of one or more of the conditions of 3-1) to 3-6) is not satisfied, the value of 'a' may be determined as a = 0.

For example, according to 3-1), when the first PTRS is configured, it may be determined as satisfied. If the second PTRS is configured, it may be determined as not satisfied. The first PTRS may be one of the block PTRS disclosed in 1) of the present specification, the PTRS for Msg3 PUSCH disclosed in 4) of the present specification, and the PTRS for small RB allocation of 5) of the present specification.

When the first PTRS is a PTRS for small RB allocation according to the embodiment of 5), the first PTRS may be a PTRS configured when the number of allocated RBs is smaller than or equal to a threshold value. And, the second PTRS may be a PTRS configured when the number of allocated RBs exceeds the threshold value. In other words, a specific threshold value for small RB allocation may be configured.

Referring to 5-1) and 5-2), the frequency density K of the first PTRS may be set higher than that of the second PTRS.

When the first PTRS is a block PTRS according to an embodiment of 1), the first PTRS may be allocated to consecutive REs (or subcarriers) and the second PTRS may be allocated to one RE per RB. When the first PTRS is a block PTRS according to an embodiment of 1), the first PTRS may be associated with a DMRS based on the embodiment of 1. For example, one RE of the consecutive REs may be used as a reference for the first PTRS to be associated with the DMRS.

Furthermore, according to 3-2), a specific condition may be determined as satisfied when a configured MCS exceeds a threshold value, or determined as not satisfied when the configured MCS is equal to or smaller than the threshold value.

According to 3-3), a specific condition may be determined as satisfied when the configured SCS exceeds a threshold value, or determined as not satisfied when the configured SCS is smaller s than or equal to the threshold value.

According to 3-4), a specific condition may be determined as satisfied when a configured bandwidth size exceeds a threshold value, or determined as not satisfied when the configured bandwidth size is smaller than or equal to the threshold value. In addition, the specific condition may be determined as satisfied when the number of allocated RBs exceeds a threshold value, or determined as not satisfied when the number of the allocated RBs is equal to or smaller than the threshold value.

According to 3-5), a specific condition may be determined as when a first DMRS is configured, or determined as not satisfied when a second DMRS is configured. The first DMRS may be a DMRS whose pattern is changed by 2) of the present specification. The second DMRS may be a DMRS to which the pattern change according to 2) of the present specification is not applied.

According to 6) of the present specification, a frequency density value of PTRS may be added based on SCS, MCS, and/or the number of RBs. As frequency density values used in the related art, three values of 0, 2, and 4 are used as shown in Table 9, but based on SCS, MCS, and/or the RB number, six values of 0, 1, 2, 4, 6, and 8 may be used as the frequency density values shown in Table 11.

Specifically, according to 6-1) and 6-2), the number of frequency density values that may use PDSCH for a PTRS is configured differently based on SCS and/or MCS.

For example, according to 6-1), after a plurality of frequency density values are configured for a specific SCS and/or MCS, some of a plurality of the frequency density values for the specific SCS and/or MCS may be used for another SCS and/or MCS.

Also, according to 6-2), after a plurality of frequency density values are configured for a specific SCS and/or MCS, values different from a plurality of the frequency density values for the specific SCS and/or MCS may be added and used for other SCSs and/or MCSs.

According to 6-3), the number of frequency density values that can be used for a PTRS for the PDSCH is configured the same irrespective of SCS and/or MCS, but the frequency density value may be changed based on SCS and/or MCS. Specifically, if frequency density values of 0, x, and y are used for a specific SCS and/or MCS, a frequency density value used for another SCS and/or MCS may be values obtained by multiplying 0, x, and y by a specific coefficient. The specific coefficient may be a positive integer.

In addition to the operations described in relation to FIG. 4, one or more of the operations described through FIG. 1 to FIG. 3 and/or the operations described in Section 1 may be combined and additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

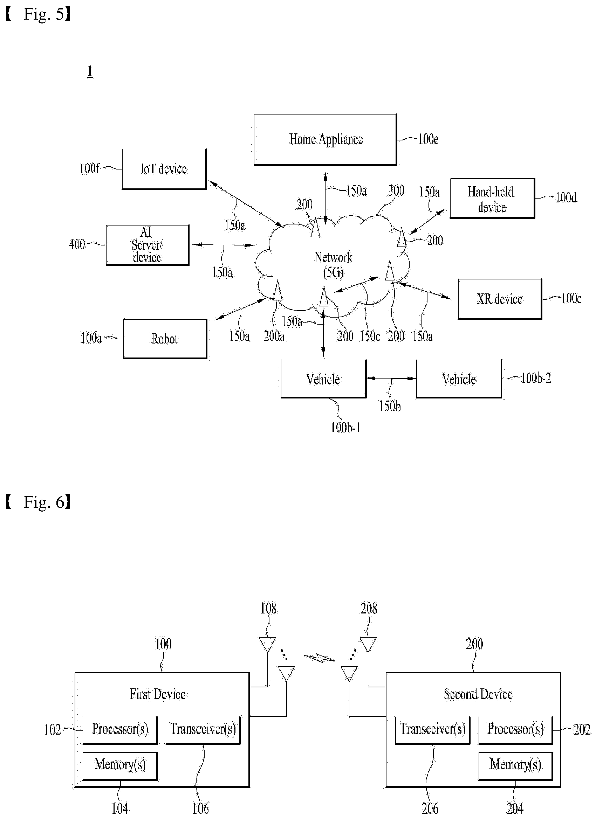

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

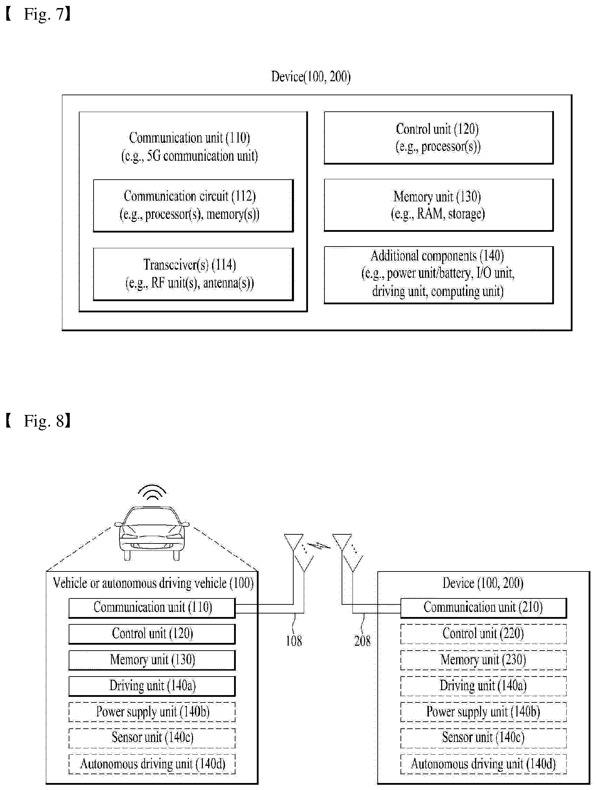

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the essential characteristics of the present disclosure. The above embodiments are therefore to be construed in all aspects as illustrative and not restrictive. The scope of the disclosure should be determined by the appended claims, not by the above description, and all changes coming within the meaning of the appended claims are intended to be embraced therein.

### INDUSTRIAL APPLICABILITY

As described above, the present disclosure is applicable to various wireless communication systems.

## Claims

1. A method of transmitting and receiving signals by a user equipment in a wireless communication system, the method comprising:
receiving (S401) a Physical Downlink Shared Channel, PDSCH; and
transmitting (S403) a Physical Uplink Control Channel, PUCCH, including Hybrid Automatic Repeat and reQuest Acknowledgement, HARQ-ACK, for the PDSCH,
wherein a processing time from a reception end timing point of the PDSCH to a transmission start timing point of the PUCCH is determined, wherein the processing time is determined by including a value of a processing time margin a,
wherein based on a Phase Tracking Reference Signal, PTRS, for the PDSCH being allocated to consecutive Resource Elements, REs, the value of the a is determined as a > 0, wherein one of the consecutive REs is used as a reference for the PTRS to be associated with a DeModulation Reference Signal, DMRS, and
wherein based on the PTRS being allocated to one RE per resource block RB, the value of the a is determined as a = 0.

2. The method of claim 1, wherein based on SCS and/or MCS applied to the PDSCH, the number of frequency density values usable for the PTRS is configured different.

3. The method of claim 1, wherein the number of frequency density values usable for the PTRS is configured the same irrespective of SCS and/or MCS applied to the PDSCH and wherein based on the SCS and/or MCS applied to the PDSCH, the frequency density value usable for the PTRS is changed.

4. A user equipment (100, 200) for transmitting and receiving signals for a wireless communication system, the user equipment (100, 200) comprising:
at least one transceiver (106, 206);
at least one processor (102, 202); and
at least one memory (104, 204) operably connected to the at least one processor (102, 202) and storing instructions enabling the at least one processor (102, 202) to perform a specific operation when executed, the specific operation comprising:
receiving a Physical Downlink Shared Channel, PDSCH; and
transmitting a Physical Uplink Control Channel, PUCCH, including Hybrid Automatic Repeat and reQuest Acknowledgement, HARQ-ACK, for the PDSCH,
wherein a processing time from a reception end timing point of the PDSCH to a transmission start timing point of the PUCCH is determined, wherein the processing time is determined by including a value of a processing time margin a,
wherein based on a Phase Tracking Reference Signal, PTRS, for the PDSCH being allocated to consecutive Resource Elements, REs, the value of the a is determined as a > 0, wherein one of the consecutive REs is used as a reference for the PTRS to be associated with a DeModulation Reference Signal, DMRS, and
wherein based on the PTRS being allocated to one RE per resource block, RB, the value of the a is determined as a = 0.

5. The user equipment (100, 200) of claim 4, wherein based on SCS and/or MCS applied to the PDSCH, the number of frequency density values usable for the PTRS is configured different.

6. The user equipment (100, 200) of claim 4, wherein the number of frequency density values usable for the PTRS is configured the same irrespective of SCS and/or MCS applied to the PDSCH and wherein based on the SCS and/or MCS applied to the PDSCH, the frequency density value usable for the PTRS is changed.

7. A computer-readable storage medium including at least one computer program executed on at least one processor to perform an operation, the operation comprising:
receiving (S401) a Physical Downlink Shared Channel, PDSCH; and
transmitting (S403) a Physical Uplink Control Channel, PUCCH, including Hybrid Automatic Repeat and reQuest Acknowledgement, HARQ-ACK, for the PDSCH,
wherein a processing time from a reception end timing point of the PDSCH to a transmission start timing point of the PUCCH is determined, wherein the processing time is determined by including a value of a processing time margin a,
wherein based on a Phase Tracking Reference Signal, PTRS, for the PDSCH being allocated to consecutive Resource Elements, REs, the value of the a is determined as a > 0, wherein one of the consecutive REs is used as a reference for the PTRS to be associated with a DeModulation Reference Signal, DMRS, and
wherein based on the PTRS being allocated to one RE per resource block, RB, the value of the a is determined as a = 0.

8. The computer-readable storage medium of claim 7, wherein based on SCS and/or MCS applied to the PDSCH, the number of frequency density values usable for the PTRS is configured different.

9. The computer-readable storage medium of claim 7, wherein the number of frequency density values usable for the PTRS is configured the same irrespective of SCS and/or MCS applied to the PDSCH and wherein based on the SCS and/or MCS applied to the PDSCH, the frequency density value usable for the PTRS is changed.

## Patentansprüche

1. Verfahren zum Übertragen und Empfangen von Signalen durch eine Benutzerausrüstung in einem drahtlosen Kommunikationssystem, wobei das Verfahren Folgendes umfasst:
Empfangen (S401) eines physischen gemeinsamen Downlink-Kanals, PDSCH; und
Übertragen (S403) eines physischen Uplink-Steuerkanals, PUCCH, einschließlich Hybrid Automatic Repeat and reQuest Acknowledgement, HARQ-ACK, für den PDSCH,
wobei eine Verarbeitungszeit von einem Empfangsendezeitpunkt des PDSCH bis zu einem Übertragungsbeginnzeitpunkt des PUCCH bestimmt wird, wobei die Verarbeitungszeit durch Einbeziehen eines Werts einer Verarbeitungszeitspanne **a** bestimmt wird,
wobei basierend auf einem Phasennachführungs-Referenzsignal, PTRS, für den PDSCH, welcher aufeinanderfolgenden Ressourcenelementen, REs, zugewiesen ist,
der Wert des **a** als **a** > 0 bestimmt wird,
wobei einer der aufeinanderfolgenden RE als Referenz für das PTRS verwendet wird, um mit einem Demodulations-Referenzsignal, DMRS, assoziiert zu werden, und
wobei basierend auf der Zuordnung des PTRS zu einem RE pro Ressourcenblock, RB, der Wert des **a** als **a** = 0 bestimmt wird.

2. Verfahren nach Anspruch 1, wobei basierend auf dem auf den PDSCH angewendeten SCS und/oder MCS die Anzahl der für das PTRS nutzbaren Frequenzdichtewerte unterschiedlich konfiguriert ist.

3. Verfahren nach Anspruch 1, wobei die Anzahl der für das PTRS nutzbaren Frequenzdichtewerte unabhängig von dem auf den PDSCH angewendeten SCS und/oder MCS gleich konfiguriert ist und wobei basierend auf das auf den PDSCH angewendeten SCS und/oder MCS der für das PTRS nutzbare Frequenzdichtewert geändert wird.

4. Benutzerausrüstung (100, 200) zum Übertragen und Empfangen von Signalen für ein drahtloses Kommunikationssystem, wobei die Benutzerausrüstung (100, 200) Folgendes umfasst:
mindestens einen Transceiver (106, 206);
mindestens einen Prozessor (102, 202); und
mindestens einen Speicher (104, 204), der betriebsbereit mit dem mindestens einen Prozessor (102, 202) verbunden ist und Anweisungen speichert, die den mindestens einen Prozessor (102, 202) dazu veranlassen, bei Ausführung eine spezifische Operation durchzuführen, wobei die spezifische Operation Folgendes umfasst:
Empfangen eines physischen gemeinsamen Downlink-Kanals, PDSCH; und
Übertragen eines physischen Uplink-Steuerkanals, PUCCH, einschließlich Hybrid Automatic Repeat and reQuest Acknowledgement, HARQ-ACK, für den PDSCH,
wobei eine Verarbeitungszeit von einem Empfangsendezeitpunkt des PDSCH bis zu einem Übertragungsbeginnzeitpunkt des PUCCH bestimmt wird, wobei die Verarbeitungszeit durch Einbeziehen eines Werts einer Verarbeitungszeitspanne a bestimmt wird,
wobei basierend auf einem Phasenverfolgungs-Referenzsignal, PTRS, für den PDSCH, das aufeinanderfolgenden Ressourcenelemente, REs, zugewiesen werden, der Wert des **a** als **a** > 0 bestimmt wird, wobei einer der aufeinanderfolgenden REs als Referenz für das PTRS verwendet wird, um mit einem Demodulations-Referenzsignal, DMRS, assoziiert zu werden, und
wobei basierend auf der Zuordnung des PTRS zu einer RE pro Ressourcenblock, RB, der Wert des **a** als **a** = 0 bestimmt wird.

5. Benutzerausrüstung (100, 200) nach Anspruch 4, wobei basierend auf dem auf das PDSCH angewendeten SCS und/oder MCS die Anzahl der für das PTRS nutzbaren Frequenzdichtewerte unterschiedlich konfiguriert ist.

6. Benutzerausrüstung (100, 200) nach Anspruch 4, wobei die Anzahl der für das PTRS nutzbaren Frequenzdichtewerte unabhängig von dem auf das PDSCH angewendeten SCS und/oder MCS gleich konfiguriert ist und wobei basierend auf dem auf das PDSCH angewendeten SCS und/oder MCS der für das PTRS nutzbare Frequenzdichtewert geändert wird.

7. Computerlesbares Speichermedium, das mindestens ein Computerprogramm enthält, das auf mindestens einem Prozessor ausgeführt wird, um die Operation auszuführen, die Folgendes umfasst:
Empfangen (S401) eines physischen gemeinsamen Downlink-Kanals, PDSCH; und
Übertragen (S403) eines physischen Uplink-Steuerkanals, PUCCH, einschließlich Hybrid Automatic Repeat and reQuest Acknowledgement, HARQ-ACK, für den PDSCH,
wobei eine Verarbeitungszeit von einem Empfangsendezeitpunkt des PDSCH bis zu einem Übertragungsbeginnzeitpunkt des PUCCH bestimmt wird, wobei die Verarbeitungszeit durch Einbeziehen eines Werts einer Verarbeitungszeitspanne **a** bestimmt wird,
wobei basierend auf einem Phasenverfolgungs-Referenzsignal, PTRS, für den PDSCH, das aufeinanderfolgenden Ressourcenelemente, REs, zugewiesen werden, der Wert des **a** als **a** > 0 bestimmt wird, wobei einer der aufeinanderfolgenden REs als Referenz für das PTRS verwendet wird, um mit einem Demodulations-Referenzsignal, DMRS, assoziiert zu werden, und
wobei basierend auf der Zuordnung des PTRS zu einer RE pro Ressourcenblock, RB, der Wert des **a** als **a** = 0 bestimmt wird.

8. Computerlesbares Speichermedium nach Anspruch 7, wobei basierend auf dem auf den PDSCH angewendeten SCS und/oder MCS die Anzahl der für das PTRS nutzbaren Frequenzdichtewerte unterschiedlich konfiguriert ist.

9. Computerlesbares Speichermedium nach Anspruch 7, wobei die Anzahl der für das PTRS nutzbaren Frequenzdichtewerte unabhängig von dem auf das PDSCH angewendeten SCS und/oder MCS gleich konfiguriert ist und wobei basierend auf dem auf das PDSCH angewendeten SCS und/oder MCS der für das PTRS nutzbare Frequenzdichtewert geändert wird.

## Revendications

1. Procédé d'émission et de réception de signaux par un équipement utilisateur dans un système de communication sans fil, le procédé comprenant :
la réception (S401) d'un canal physique partagé de liaison descendante, PDSCH ; et
l'émission (S403) d'un canal physique de commande de liaison montante, PUCCH, comprenant un accusé de réception de demande de répétition automatique hybride, HARQ-ACK, pour le PDSCH,
dans lequel un temps de traitement à partir d'un point de temporisation de fin de réception du PDSCH jusqu'à un point de temporisation de début d'émission du PUCCH est déterminé, dans lequel le temps de traitement est déterminé en incluant une valeur d'une marge de temps de traitement **a**,
dans lequel sur la base d'un signal de référence de suivi de phase, PTRS, pour le PDSCH attribué à des éléments de ressource, RE, consécutifs,
la valeur de **a** est déterminée comme **a** > 0,
dans lequel l'un des RE consécutifs est utilisé comme référence pour que le PTRS soit associé à un signal de référence de démodulation, DMRS, et
dans lequel, sur la base du PTRS attribué à un RE par bloc de ressources, RB, la valeur de **a** est déterminée comme **a** = 0.

2. Procédé selon la revendication 1, dans lequel sur la base d'un SCS et/ou d'un MCS appliqués au PDSCH, le nombre de valeurs de densité de fréquence utilisables pour le PTRS est configuré différemment.

3. Procédé selon la revendication 1, dans lequel le nombre de valeurs de densité de fréquence utilisables pour le PTRS est configuré de la même manière indépendamment du SCS et/ou du MCS appliqués au PDSCH, et dans lequel, sur la base du SCS et/ou du MCS appliqués au PDSCH, la valeur de densité de fréquence utilisable pour le PTRS est modifiée.

4. Équipement utilisateur (100, 200), pour émettre et recevoir des signaux pour un système de communication sans fil, l'équipement utilisateur (100, 200) comprenant :
au moins un émetteur-récepteur (106, 206) ;
au moins un processeur (102, 202) ; et
au moins une mémoire (104, 204) connectée fonctionnellement à l'au moins un processeur (102, 202) et stockant des instructions permettant à l'au moins un processeur (102, 202) de réaliser une opération spécifique lorsqu'elles sont exécutées, l'opération spécifique comprenant :
la réception d'un canal physique partagé de liaison descendante, PDSCH ; et
l'émission d'un canal physique de commande de liaison montante, PUCCH, comprenant un accusé de réception de demande de répétition automatique hybride, HARQ-ACK, pour le PDSCH,
dans lequel un temps de traitement à partir d'un point de temporisation de fin de réception du PDSCH jusqu'à un point de temporisation de début d'émission du PUCCH est déterminé, dans lequel le temps de traitement est déterminé en incluant une valeur d'une marge de temps de traitement **a**,
dans lequel sur la base d'un signal de référence de suivi de phase, PTRS, pour le PDSCH attribué à des éléments de ressource, RE, consécutifs, la valeur de **a** est déterminée comme **a** > 0, dans lequel l'un des RE consécutifs est utilisé comme référence pour que le PTRS soit associé à un signal de référence de démodulation, DMRS, et
dans lequel, sur la base du PTRS attribué à un RE par bloc de ressources, RB, la valeur de **a** est déterminée comme **a** = 0.

5. Équipement utilisateur (100, 200) selon la revendication 4, dans lequel, sur la base du SCS et/ou du MCS appliqués au PDSCH, le nombre de valeurs de densité de fréquence utilisables pour le PTRS est configuré différemment.

6. Équipement utilisateur (100, 200) selon la revendication 4, dans lequel le nombre de valeurs de densité de fréquence utilisables pour le PTRS est configuré de la même manière indépendamment du SCS et/ou du MCS appliqués au PDSCH, et dans lequel, sur la base du SCS et/ou du MCS appliqués au PDSCH, la valeur de densité de fréquence utilisable pour le PTRS est modifiée.

7. Support de stockage lisible par ordinateur comportant au moins un programme informatique exécuté sur au moins un processeur pour réaliser une opération, l'opération comprenant :
la réception (S401) d'un canal physique partagé de liaison descendante, PDSCH ; et
l'émission (S403) d'un canal physique de commande de liaison montante, PUCCH, comprenant un accusé de réception de demande de répétition automatique hybride, HARQ-ACK, pour le PDSCH,
dans lequel un temps de traitement à partir d'un point de temporisation de fin de réception du PDSCH jusqu'à un point de temporisation de début d'émission du PUCCH est déterminé, dans lequel le temps de traitement est déterminé en incluant une valeur d'une marge de temps de traitement **a**,
dans lequel sur la base d'un signal de référence de suivi de phase, PTRS, pour le PDSCH attribué à des éléments de ressource, RE, consécutifs, la valeur de **a** est déterminée comme **a** > 0, dans lequel l'un des RE consécutifs est utilisé comme référence pour que le PTRS soit associé à un signal de référence de démodulation, DMRS, et
dans lequel, sur la base du PTRS attribué à un RE par bloc de ressources, RB, la valeur de **a** est déterminée comme **a** = 0.

8. Support de stockage lisible par ordinateur selon la revendication 7, dans lequel sur la base du SCS et/ou du MCS appliqués au PDSCH, le nombre de valeurs de densité de fréquence utilisables pour le PTRS est configuré différemment.

9. Support de stockage lisible par ordinateur selon la revendication 7, dans lequel le nombre de valeurs de densité de fréquence utilisables pour le PTRS est configuré de la même manière indépendamment du SCS et/ou du MCS appliqués au PDSCH et dans lequel, sur la base du SCS et/ou du MCS appliqués au PDSCH, la valeur de densité de fréquence utilisable pour le PTRS est modifiée.
